# EUROPEAN PATENT APPLICATION

(11) **EP 1 630 498 A2**
(43) Date of publication of application: **01.03.2006**
(21) Application number: 05252206.7
(22) Date of filing: 07.04.2005
(51) Int. Cl.: F25B 49/02

(54) **Apparatus for controlling operation of air conditioner**

(30) Priority: 16.08.2004 KR 2004064388
(71) Applicant: LG ELECTRONICS INC., Seoul (KR)
(72) Inventor: Hwang, Yoon-Jei, Seoul (KR); Song, Chan-Ho Dongbu Apt. 120-302, Gyeonggi-Do (KR); Jang, Ji-Young Jugong-Ttranchae Apt. 101-1403, Gyeonggi-Do (KR); Park, Jeong-Taek, Seoul (KR)
(74) Representative: Jenkins, Peter David

(57) **Abstract**

An apparatus for controlling operation of an air conditioner having a compressor for compressing refrigerant and a heat exchanger for heat-exchanging refrigerant with ambient air, includes a temperature sensor installed on a passage through which refrigerant passes, for detecting a temperature of refrigerant; and a control unit connected to the temperature sensor, for controlling the operation of the compressor in response to the temperature detected by the temperature sensor. Accordingly, an overload of the compressor is determined on the basis of a temperature of refrigerant, which is detected by the temperature sensor, so that an effective compressor overload response can be made.

## Description

The present invention relates to an air conditioner, and particularly, to an apparatus for controlling operation of an air conditioner capable of effectively responding to an overload of a compressor.

In general, an air conditioner is a device for maintaining a pleasant room temperature by using latent heat of vaporization of refrigerant which is circulated in a refrigerating cycle of a compressor, a heat exchanger, an expansion valve, and evaporator.

The air conditioner performs cooling operation on a room through a series of processes that refrigerant is compressed by the compressor at up to saturation pressure, the compressed refrigerant is liquefied by the heat exchanger, the liquefied refrigerant is introduced to the evaporator in a state of being decompressed and expanded by throttling of the expansion valve, and the introduced refrigerant is heat-exchanged with ambient air of the evaporator while being evaporated in the evaporator.

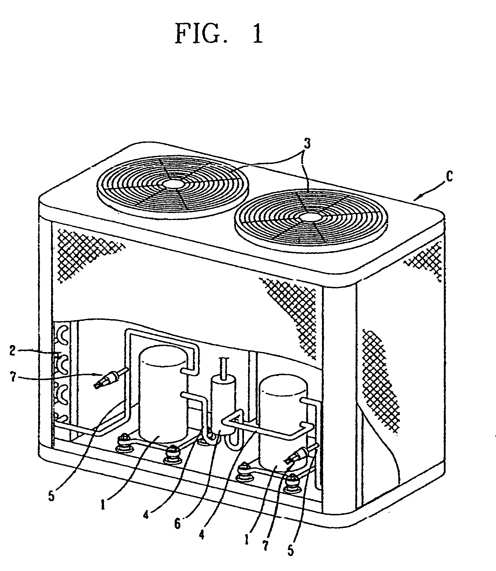

As shown in FIG. 1, an outdoor unit of a conventional air conditioner includes a compressor 1 installed inside a casing (C) and connected to a suction pipe 4 through which refrigerant is sucked from an evaporator (not shown) of an indoor unit (not shown), for compressing the sucked refrigerant; a heat exchanger 2 connected to a discharge pipe 5 through which the refrigerant compressed in the compressor 1 is discharged, for absorbing heat of the high pressure refrigerant to liquefy the refrigerant; an outdoor fan 3 installed at one side of the heat exchanger 2, for introducing the external air toward the heat exchanger 2; an accumulator 6 installed at the suction pipe 4, for separating a liquefied refrigerant from the refrigerant sucked to the compressor 1; a pressure sensor 7 installed at the discharge pipe 5, for detecting pressure of the refrigerant discharged from the compressor 1; and a control unit (not shown) connected to the pressure sensor 7, for controlling the compressor in response to a pressure value detected from the pressure sensor 7.

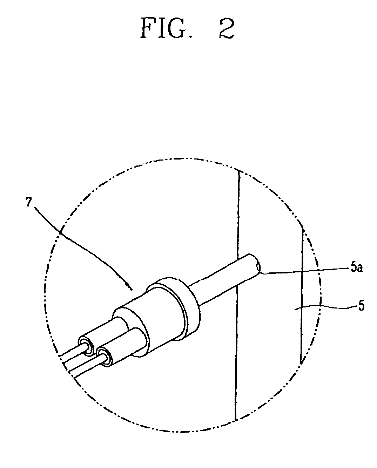

As shown in FIG. 2, the pressure sensor 7 is insertedly mounted to a sensor hole 5a formed in the discharge pipe 5, and detects pressure of the refrigerant passing through the discharge pipe 5.

The operation of the conventional air conditioner having such a structure will now be described.

First, the compressor 1 is driven to compress refrigerant. Then, the compressed refrigerant is introduced to the heat exchanger 2 through the discharge pipe 5, and is condensed in the heat exchanger 2. The condensed refrigerant is decompressed and expanded while passing through the expansion valve, and then moves to the evaporator. The low pressure refrigerant introduced into the evaporator is evaporated by being heat-exchanged with ambient air of the evaporator, and then is sucked again into the compressor 1 through the suction pipe 4. Such a series of processes are repetitively performed.

At this time, the pressure sensor 7 installed at the discharge pipe 5 detects pressure of refrigerant gas discharged from the compressor 1 and outputs the detected pressure to the control unit. Then, the control unit compares the pressure of the refrigerant gas with a preset reference pressure value. If the pressure of the refrigerant is greater than the preset pressure, the control unit determines that it is an overload state, and stops operation of the compressor 1 or converts capacity into lower capacity, thereby preventing excessive operation of the compressor 1.

However, such a conventional air conditioner is disadvantageous in that installation and replacement of the pressure sensor 7 are complicated and difficult because a sensor hole 5a should be formed in the discharge pipe 5 in order to install the pressure sensor 7 at the discharge pipe 5.

In addition, because the pressure sensor 7 is relatively expensive, installing the pressure sensor 7 cause a manufacturing cost of an entire system to increase.

Therefore, an aim of the present invention is to provide an operation control apparatus of an air conditioner capable of removing problems caused by employment of a pressure sensor and effectively responding to an overload of a compressor by installing a temperature sensor for detecting a temperature of refrigerant on a passage for passing refrigerant, and determining whether the compressor is in an overload state and responding to the overload of the compressor by using a temperature of the refrigerant, which is detected by the temperature sensor.

To achieve these and other advantages and in accordance with the purpose of the present invention, as embodied and broadly described herein, there is provided an operation control apparatus of an air conditioner having a compressor for compressing refrigerant and a heat exchanger for heat-exchanging refrigerant with ambient air, comprising a temperature sensor installed on a passage for passing refrigerant, for detecting a temperature of refrigerant; and a control unit connected to the temperature sensor, for controlling the operation of the compressor in response to the temperature detected by the temperature sensor.

To achieve these and other advantages and in accordance with the purpose of the present invention, as embodied and broadly described herein, there is provided an operation control apparatus of an air conditioner having a compressor for compressing refrigerant and a heat exchanger for heat-exchanging refrigerant with ambient air, comprising a first temperature sensor installed in the heat exchanger, for detecting a temperature of refrigerant passing through the heat exchanger; a second temperature sensor installed at a discharge pipe through which refrigerant is discharged from the compressor, for detecting a temperature of refrigerant passing through the discharge pipe; and a control unit connected to the first and second temperature sensors, for controlling operation of the compressor in response to the temperature detected by the first and second temperature sensors.

The foregoing and other aims, features, aspects and advantages of the present invention will become more apparent from the following detailed description of the present invention when taken in conjunction with the accompanying drawings.

The accompanying drawings, which are included to provide a further understanding of the invention and are incorporated in and constitute a unit of this specification, illustrate embodiments of the invention and together with the description serve to explain the principles of the invention.

In the drawings:
FIG. 1 is a partially cut-out perspective view showing an outdoor unit of the conventional air conditioner;
FIG. 2 is a partially enlarged view showing a pressure sensor of FIG. 1;
FIG. 3 is a partially cut-out perspective view showing an outdoor unit of an air conditioner in accordance with an embodiment of the present invention;
FIG. 4 is a partially enlarged view showing a temperature sensor of FIG. 3;
FIG. 5 is a perspective view showing an air conditioner in accordance with another embodiment of the present invention; and
FIG. 6 is a control block diagram showing an operation control apparatus of the air conditioner in accordance with the present invention.

Reference will now be made in detail to the preferred embodiments of the present invention, examples of which are illustrated in the accompanying drawings.

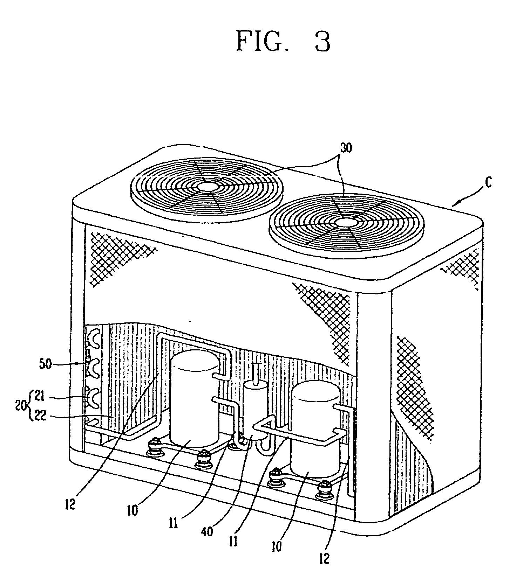

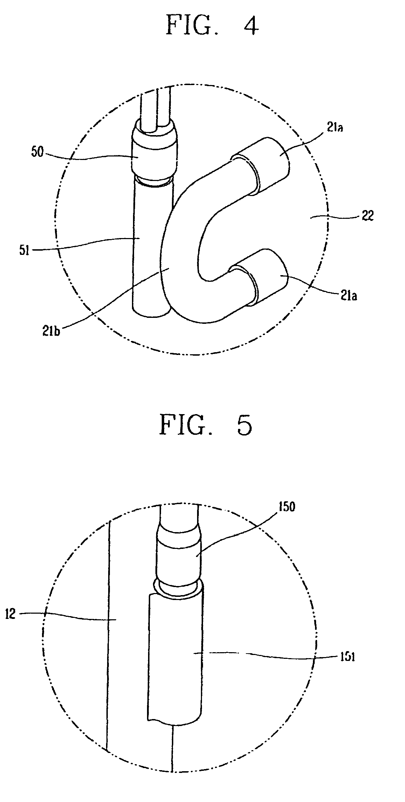

As shown in FIGS. 3 and 4, an outdoor unit of an air conditioner in accordance with the present invention includes a plurality of compressors 10 installed inside a casing (C) and connected to a suction pipe 11 through which refrigerant is sucked from an evaporator (not shown) of an indoor unit (not shown), for compressing the sucked refrigerant; a heat exchanger 20 connected to a discharge pipe 12 through which refrigerant compressed in the compressor 10 is discharged, for absorbing heat of the high pressure refrigerant to thereby liquefy the refrigerant; an outdoor fan 30 installed at one side of the heat exchanger 20, for introducing the external air toward the heat exchanger 20; an accumulator 40 installed at the suction pipe 11, for separating a liquefied refrigerant from the refrigerant sucked to the compressor 10; and an operation control apparatus installed on a passage through which refrigerant passes thus to detect a temperature of the refrigerant and controlling the operation of the compressor upon determining an overload state of the compressor by using the detected temperature value.

As for the compressor 10, a single compressor may be used, but, preferably, a plurality compressors may be connected in parallel in consideration of capacity of the air conditioner or the like. In case that a plurality of compressors are employed, compressors operated by different driving methods, such as a variable speed compressor controlled by an inverter and a constant speed compressor, are preferably used, so that power consumption can be reduced and the operation can be stably carried out. In addition, when a plurality of compressors are used, capacities of the compressors are preferably made to be different, so that each compressor can be easily controlled according to operation conditions.

The heat exchanger 20 includes a heat transfer pipe 21 connected to the discharge pipe 12 and guiding refrigerant; and a heat transfer fin 22 disposed around the heat transfer pipe 21 to expand a heat transfer area. The heat transfer pipe 21 includes a plurality of straight pipes 21a disposed at predetermined intervals in a vertical direction; and a plurality of curved pipes 21 b alternately connecting the straight pipes 21a so that the refrigerant can flow through the straight pipes 21a as a zigzag shape.

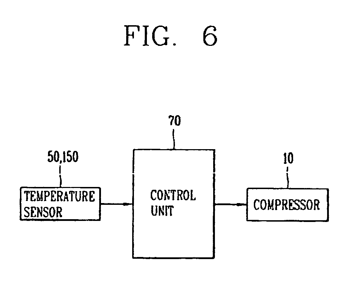

As shown in FIGS. 4 and 6, the operation control apparatus includes a temperature sensor 50 installed adjacent to the heat transfer pipe 21 of the heat exchanger 20, for detecting a temperature of refrigerant passing through the heat transfer pipe 21; and a control unit 70 electrically connected to the temperature sensor 50, for comparing a temperature value of the refrigerant, which is detected from the temperature sensor 50, with a preset temperature value to thereby determine whether the compressor 10 is in an overload state, and controlling the operation of the compressor 10.

Preferably, the temperature sensor 50 is installed at the curved pipe 21 b which protrudes to the outside of the heat transfer fin 22 so as to make its installation easy. In such case, a cylindrical sensor housing 51 where the temperature sensor 50 is separably inserted is coupled to the curved pipe 21 b by a coupling means such as welding or the like.

FIG. 5 shows another embodiment of an operation control apparatus of an air conditioner in accordance with the present invention. In the embodiment of the present invention, a temperature sensor 150 detecting a temperature of refrigerant is installed at a discharge pipe 12 for discharging refrigerant from the compressor 10.

A sensor housing 151 where the temperature sensor 150 is separably installed is coupled to the discharge pipe 12. The sensor housing 151 is bent to provide a space in which the temperature sensor 150 is inserted, and both sides of the sensor housing 151 are formed as a plate shape so as to be coupled to the discharge pipe 12 by a coupling means such as welding or the like.

Meanwhile, the spirit or essential characteristics of the temperature sensor 50, 150 and the sensor housing 51, 151 of the operation control apparatus that are independently described in each embodiment can be separately applied or can be combined. Namely, the temperature sensor 50, 150 for measuring a temperature of refrigerant can be installed at both the heat exchanger 20 and the discharge pipe 12.

Operation of the operation control apparatus of the air conditioner in accordance with the present invention having such a structure will now be described.

First, the compressor 10 is driven to compress refrigerant. The compressed refrigerant is introduced to the heat exchanger 20 through the discharge pipe 12, and is condensed in the heat exchanger 20. Then, the condensed refrigerant is decompressed and expanded while passing through an expansion valve, and moves to the evaporator. The low pressure refrigerant introduced to the evaporator is evaporated by being heat-exchanged with ambient air of the evaporator, and is sucked again to the compressor 10 through the suction pipe 11. Such a series of processes are repetitively performed.

At this time, the temperature sensor 50, 150 installed at the heat transfer pipe 21 of the heat exchanger 20 or the discharge pipe 12 detects a temperature of refrigerant gas discharged from the compressor 10 and outputs the detected temperature to the control unit 70. Then, the control unit 70 compares the temperature of the refrigerant gas with a preset reference temperature value.

And if the temperature of the refrigerant gas is greater than the set temperature, the control unit 70 determines that it is an overload state, and stops operation of the compressor 10 or converts capacity into lower capacity in case of a variable speed compressor, thereby preventing excessive operation of the compressor 10.

In the operation control apparatus of the air conditioner in accordance with the present invention constructed and operated in above-described manner, a relatively cheap temperature sensor is installed at a heat exchanger or a discharge pipe, and an overload of the compressor is detected on the basis of a temperature value of refrigerant, which is detected by the temperature sensor, so that a load of the compressor can be properly controlled. Accordingly, a manufacturing cost of the air conditioner is lowered, and an overload of the compressor, which may be generated in operation, can be effectively prevented, thereby improving reliability of a system.

In addition, the temperature sensor is simply installed by being inserted in a sensor housing coupled to the heat exchanger or the discharge pipe by a coupling means such as welding or the like, so that installation of the temperature sensor can be easily carried out.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An apparatus for controlling operation of an air conditioner having a compressor for compressing refrigerant and a heat exchanger for heat-exchanging refrigerant with ambient air, comprising:
a temperature sensor installed on a passage through which refrigerant passes, for detecting a temperature of refrigerant; and
a control unit connected to the temperature sensor, for controlling the operation of the compressor in response to the temperature detected by the temperature sensor.

2. The apparatus of claim 1, wherein the temperature sensor is installed in the heat exchanger.

3. The apparatus of claim 2, wherein the heat exchanger includes a heat transfer pipe guiding refrigerant and a plurality of heat transfer fins disposed around the heat transfer pipe and expanding a heat transfer area, and the temperature sensor is installed at the heat transfer pipe.

4. The apparatus of claim 3, wherein the heat transfer pipe includes a plurality of straight pipes and a plurality of curved pipes alternately connecting the straight pipes, and the temperature sensor is installed at the curved pipe.

5. The apparatus of claim 2, wherein a sensor housing where the temperature sensor is separably installed is mounted at the heat exchanger.

6. The apparatus of claim 5, wherein the sensor housing is formed as a cylindrical shape, and is coupled to a heat transfer pipe through which refrigerant passes in the heat exchanger.

7. The apparatus of claim 1, wherein the temperature sensor is installed at a discharge pipe through which refrigerant is discharged from the compressor.

8. The apparatus of claim 7, wherein a sensor housing where the temperature sensor is separably installed is mounted at the discharge pipe.

9. The apparatus of claim 8, wherein the sensor housing is formed as a plate shape bent so as to provide a space in which the temperature sensor is inserted, and both sides of the sensor housing is coupled to the discharge pipe.

10. An apparatus for controlling operation of an air conditioner having a compressor for compressing refrigerant and a heat exchanger for heat-exchanging refrigerant with ambient air, comprising:
a first temperature sensor installed in the heat exchanger, for detecting a temperature of refrigerant passing through the heat exchanger;
a second temperature sensor installed at a discharge pipe through which refrigerant is discharged from the compressor, for detecting a temperature of refrigerant passing through the discharge pipe; and
a control unit connected to the first and second temperature sensors, for controlling operation of the compressor in response to the temperatures detected by the first and second temperature sensors.

11. The apparatus of claim 10, wherein first and second sensor housings in which the first and second temperature sensors are respectively and separably installed are mounted at the heat exchanger and the discharge pipe, respectively.

12. The apparatus of claim 11, wherein the first and second sensor housings are respectively formed as a cylindrical shape, and are respectively coupled to a heat transfer pipe for passing refrigerant in the heat exchanger and to the discharge pipe.

13. The apparatus of claim 11, wherein the first and second sensor housings are respectively formed as a plate shape bent so as to provide spaces in which the temperature sensors are inserted respectively, and are coupled to a heat transfer pipe for passing refrigerant in the heat exchanger and to the discharge pipe, respectively.

14. The apparatus of claim 10, wherein a plurality of compressors are connected in parallel to each other, and at least one of the compressors is a variable speed compressor.
